# EUROPÄISCHE PATENTSCHRIFT

(11) **EP 4 083 448 B1**
(45) Veröffentlichungstag und Bekanntmachung des Hinweises auf die Patenterteilung: **24.07.2024**
(21) Anmeldenummer: 22162871.2
(22) Anmeldetag: 18.03.2022
(51) Int. Cl.: F16B 7/04, F16B 37/04, F16L 3/10

(54) **SCHIEBEBEFESTIGER UND MONTAGESCHIENE MIT SCHIEBEBEFESTIGER**
SLIDE FASTENER AND MOUNTING RAIL WITH SLIDE FASTENER
FERMOIR ACTIONNÉ PAR CURSEUR ET RAIL DE MONTAGE POURVU DE FERMOIR ACTIONNÉ PAR CURSEUR

(30) Priorität: 30.04.2021 DE 102021111170
(43) Veröffentlichungstag der Anmeldung: 02.11.2022
(73) Patentinhaber: fischerwerke GmbH & Co. KG, 72178 Waldachtal (DE)
(72) Erfinder: Förmer, Thomas, 72401 Haigerloch-Gruol (DE)
(74) Vertreter: Suchy, Ulrich Johannes

(56) Entgegenhaltungen:
- EP-B1- 0 389 309
- DE-A1- 102013 113 735
- DE-A1- 102014 110 192
- US-A1- 2019 376 626

## Beschreibung

Die Erfindung betrifft einen Schiebebefestiger mit den Merkmalen des Anspruchs 1 und eine Montageschiene mit dem Schiebebefestiger mit den Merkmalen des Anspruchs 8.

Montageschienen werden typischerweise an Decken, Wänden oder Pfosten von Gebäuden und Bauwerken befestigt und dienen zur Befestigung von beispielsweise Rohrschellen unter einer Decke oder an einer Wand oder einem Pfosten. Montageschienen weisen typischerweise einen durchgehenden Längsschlitz in einer ersten Seite und Langlöcher in anderen Seiten der Montageschiene auf. Eine Befestigung an den Montageschienen erfolgt vielfach mit Hammerkopfschrauben oder Rechteckmuttern, die so in die Montageschienen eingebracht werden, dass ein Schraubenschaft oder eine Gewindestange zu einer Befestigung beispielsweise einer Rohrschelle aus der Montageschiene vorsteht.

Die Offenlegungsschrift DE 42 43 185 A1 offenbart einen mehrteiligen Befestiger für eine Schraubbefestigung beispielsweise einer Gewindestange an einer Montageschiene. Der bekannte Befestiger weist eine in Draufsicht quadratische Lochscheibe als Auflager, eine in Draufsicht längliche Mutter und einen Halter aus Kunststoff auf, der das Auflager und die Mutter elastisch verbindet und mit einem Mutterngewinde gleichachsig zu einem Mittelloch des Auflagers hält. Wenn die Mutter in eine Montageschiene eingesetzt ist, spannt der Halter die Mutter von innen und das Auflager von außen gegen die Montageschiene, so dass der Befestiger unverschieblich an der Montageschiene festgelegt ist. Die DE 102014110192 A1 offenbart ein anderes Beispiel eines solchen Befestigers.

Aufgabe der Erfindung ist, einen Schiebebefestiger und eine Montageschiene mit dem Schiebebefestiger für eine Schraubbefestigung an der Montageschiene vorzuschlagen, der in einer Längssichtung der Montageschiene verschiebbar ist. "Schraubbefestigung" meint eine Befestigung einer Schraube, Gewindestange und allgemein eines ein Gewinde aufweisenden Schraubelements mittels des Schiebebefestigers an der Montageschiene und auch eine Befestigung an einem Gewindeschaft des Schiebebefestigers.

Diese Aufgabe wird erfindungsgemäß durch die Merkmale der Ansprüche 1 und 6 gelöst.

Der erfindungsgemäße Schiebebefestiger weist ein Auflager auf, das zu einer Anlage außen an der Montageschiene vorgesehen ist, ein Hammerkopfelement, das zu einer Anlage innen an der Montageschiene vorgesehen ist, und einen Halter für das Hammerkopfelement. Das Auflager stützt den Schiebebefestiger außen an der Montageschiene ab und das Hammerkopfelement hält den Schiebebefestiger gegen ein Herausziehen aus der Montageschiene senkrecht zur Montageschiene. Das Hammerkopfelement ist länger als beispielsweise ein Längsschlitz oder ein Langloch der Montageschiene breit ist, so dass es in der Montageschiene schräg- oder quergestellt die Montageschiene innen hintergreift, und nicht senkrecht zur Montageschiene durch den Längsschlitz oder das Langloch herausgezogen werden kann. Mit "Länge" ist eine größte Abmessung des Hammerkopfelements radial zu einer Achse eines Befestigungsgewindes des Hammerkopfelements gemeint. Vorzugsweise ist das Hammerkopfelement nicht breiter als der Längsschlitz oder das Langloch der Montageschiene, so dass es längs zu dem Längsschlitz oder dem Langloch ausgerichtet durch den Längsschlitz oder das Langloch in die Montageschiene einbringbar und durch Drehen in der Montageschiene schräg- oder quergestellt werden kann, so dass es die Montageschiene innen hintergreift. Möglich ist allerdings auch ein Hammerkopfelement, das breiter als der Längsschlitz oder das Langloch der Montageschiene ist und das sich nicht durch den Längsschlitz oder das Langloch in die Montageschiene einbringen lässt, sondern von einem Ende in die Montageschiene eingebracht werden muss.

Das Befestigungsgewinde ist ein Innengewinde in einem Sackloch oder in einem Durchgangsloch des Hammerkopfelements, oder ein Außengewinde an beispielsweise einem Gewindeschaft des Hammerkopfelements. In der Achsrichtung des Befestigungsgewindes gesehen befindet sich das Befestigungsgewinde vorzugsweise in einer Mitte des Hammerkopfelements.

Das Auflager weist ein Durchgangsloch auf, dessen Durchmesser mindestens so groß wie ein Gewindeaußendurchmesser, das heißt ein größerer Durchmesser des Befestigungsgewindes ist. Das Durchgangsloch des Auflagers ist gleichachsig mit dem Befestigungsgewinde des Hammerkopfelements, oder es überdeckt jedenfalls das Durchgangsloch des Auflagers in der Achsrichtung des Befestigungsgewindes gesehen das Befestigungsgewinde des Hammerkopfelements, so dass beispielsweise eine Gewindestange durch das Durchgangsloch des Auflagers durchgeführt und in das Befestigungsgewinde des Hammerkopfelements geschraubt werden kann, oder dass der Gewindeschaft des Hammerkopfelements durch das Durchgangsloch des Auflagers durchtreten kann.

Des Weiteren weist der erfindungsgemäße Schiebebefestiger einen Abstandshalter auf, der das Hammerkopfelement in einem Mindestabstand von dem Auflager hält, der ein Festklemmen des Schiebebefestigers an der Montageschiene verhindert und dadurch stets eine Verschiebbarkeit des Schiebebefestigers in der Längsrichtung der Montageschiene sicherstellt. Der Abstandshalter ist ein von dem Halter separates Bauteil, das heißt ein eigenes oder jedenfalls ein anderes Bauteil als der Halter. Die Erfindung ermöglicht eine Schiebebefestigung an einer Montageschiene beispielsweise zu einem Längenausgleich zwischen einem an der Montageschiene befestigten Bauteil und der Montageschiene, wenn sich das Bauteil und die Montageschiene durch unterschiedliche Temperaturdehnungen unterschiedlich dehnen und kürzen.

Insbesondere ist der Abstandshalter eine Hülse, die gleichachsig mit dem Befestigungsgewinde oder jedenfalls so angeordnet ist, dass sie axial gesehen das Befestigungsgewinde überdeckt und eine Schraube, Gewindestange oder dergleichen durch die Hülse durchführbar und in das Befestigungsgewinde des Hammerkopfelements schraubbar ist. Ein Innendurchmesser der Hülse ist mindestens so groß wie der Gewindeaußendurchmesser des Befestigungsgewindes.

Vorzugsweise weist das Auflager an einer dem Hammerkopfelement zugewandten Unterseite und/oder das Hammerkopfelement an einer dem Auflager zugewandten Oberseite glatte Gleitflächen auf. Es sind also die Flächen des Auflagers und/oder des Hammerkopfelements als glatte Gleitflächen ausgeführt, die an der Montageschiene anliegen, wenn das Hammerkopfelement innen oder das Auflager außen an der Montageschiene anliegen. Die glatten Gleitflächen erleichtern die Verschiebung des erfindungsgemäßen Schiebebefestigers in der Längsrichtung der Montageschiene.

Vorzugsweise verbindet der Halter das Auflager und das Hammerkopfelement drehfest miteinander, so dass das Hammerkopfelement, wenn es sich in der Montageschiene befindet, durch Drehen des Auflagers, das sich außen an der Montageschiene befindet, gedreht werden kann, um das Hammerkopfelement in Hintergriff in der Montageschiene zu bringen.

Der Halter und das Auflager können einstückig, das heißt ein Bauteil sein. Der Mindestabstand, in dem der Abstandshalter das Hammerkopfelement von dem Auflager hält, bemisst sich in diesem Fall von dem das Auflager bildenden Teil des Bauteils, das den Halter und das Auflager umfasst, beziehungsweise von einer Anlagefläche des Auflagers, die zur Anlage außen an der Montageschiene vorgesehen ist.

Bei einer Ausgestaltung der Erfindung weist der Halter eine Tasche auf, in die das Hammerkopfelement radial zur Achse seines Befestigungsgewindes einbringbar ist. Die Tasche ist ein Hohlraum zur Aufnahme des Hammerkopfelements.

Die Montageschiene weist einen Längsschlitz in einer ersten Seite auf. Ist der erfindungsgemäße Schiebebefestiger in vorgesehener Weise an der Montageschiene befestigt, befindet sich das Auflager außen an der Montageschiene und das Hammerkopfelement hintergreift die erste Seite der Montageschiene von innen, so dass das Hammerkopfelement nicht in axialer Richtung seines Befestigungsgewindes aus der Montageschiene heraus gezogen werden kann. Wird der Schiebebefestiger in axialer Richtung des Befestigungsgewindes von außen in Richtung der Montageschiene beaufschlagt, gelangt das Auflager außen an der ersten Seite der Montageschiene in Anlage und stützt sich außen an der ersten Seite der Montageschiene ab.

Der Mindestabstand, in dem der Abstandshalter das Hammerkopfelement von dem Auflager hält, ist mindestens so groß, wie eine Höhe der ersten Seite der Montageschiene seitlich ihres Längsschlitzes. Die Höhe der ersten Seite der Montageschiene kann deren Wanddicke sein. Ist die erste Seite der Montageschiene seitlich ihres Längsschlitzes nach innen abgewinkelt, wodurch Stege gebildet sind, was bei Montageschienen durchaus üblich ist, ist die Höhe der ersten Seite der Montageschiene die Höhe der Abwinklung. Es ist jedenfalls der Mindestabstand des Hammerkopfelements von dem Auflager mindestens so groß, dass das Auflager außen und das Hammerkopfelement innen leicht anliegen, so dass der Schiebebefestiger nicht an der Montageschiene festgeklemmt ist, sondern in der Längsrichtung der Montageschiene stets verschiebbar ist. Der Mindestabstand kann auch größer sein, so dass ein Zwischenraum zwischen dem Hammerkopfelement und der Innenseite der ersten Seite der Montageschiene und/oder ein Zwischenraum zwischen dem Auflager und einer Außenseite der ersten Seite der Montageschiene besteht, wenn das Auflager außen an der ersten Seite der Montageschiene oder das Hammerkopfelement innen an der ersten Seite der Montageschiene anliegt.

Vorzugsweise ist das Hammerkopfelement niedriger als eine lichte Höhe der Montageschiene in Richtung der Achse des Befestigungsgewindes des Hammerkopfelements, so dass das Hammerkopfelement Spiel in axialer Richtung seines Befestigungsgewindes in der Montageschiene aufweist. Liegt das Hammerkopfelement innen an der ersten Seite der Montageschiene an, besteht ein Zwischenraum zwischen dem Hammerkopfelement und einer der ersten Seite gegenüberliegenden zweiten Seite der Montageschiene und umgekehrt. Dadurch wird ein Klemmen des Hammerkopfelements in der Montageschiene vermieden.

Zu einer Befestigung eines Gegenstands mit mehreren Schiebebefestigern sieht eine Ausgestaltung der Erfindung ein Verbindungselement vor, das die Schiebebefestiger in einem Abstand in der Längsrichtung der Montageschiene voneinander hält. Die Schiebebefestiger lassen sich nur gemeinsam in der Längsrichtung der Montageschiene verschieben.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar, sofern sie unter den Wortlaut der beigefügten Ansprüche fallen.

Die Erfindung wird nachfolgend anhand zweier in der Zeichnung dargestellter Ausführungsbeispiele näher erläutert. Es zeigen:
- Figur 1: eine perspektivische Explosionsdarstellung eines Schiebebefestigers gemäß der Erfindung;
- Figur 2: einen Achsschnitt des Schiebebefestigers aus Figur 1 mit einer Montageschiene im Querschnitt gemäß der Erfindung;
- Figur 3: die Montageschiene aus Figur 2, an der Rohrschellen mit Schiebebefestigern gemäß Figuren 1 und 2 befestigt sind;
- Figur 4: einen Achsschnitt eines zweiten Ausführungsbeispiels eines erfindungsgemäßen Schiebebefestigers in einer Montageschiene; und
- Figur 5: eine perspektivische Darstellung des Schiebebefestigers aus Figur 4 in der Montageschiene gemäß der Erfindung.

Grundsätzlich sind in den Figuren aus Gründen der Übersichtlichkeit bei beiden Ausführungsbeispielen gleiche Teile mit gleichen Bezugszahlen versehen.

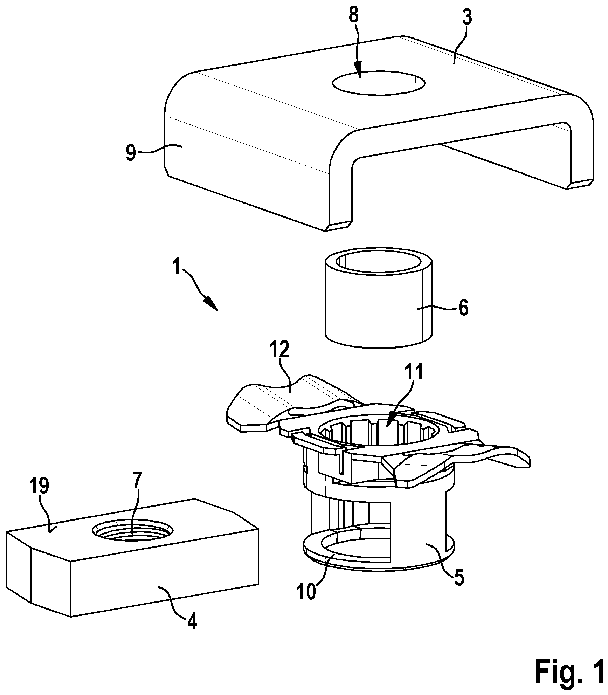

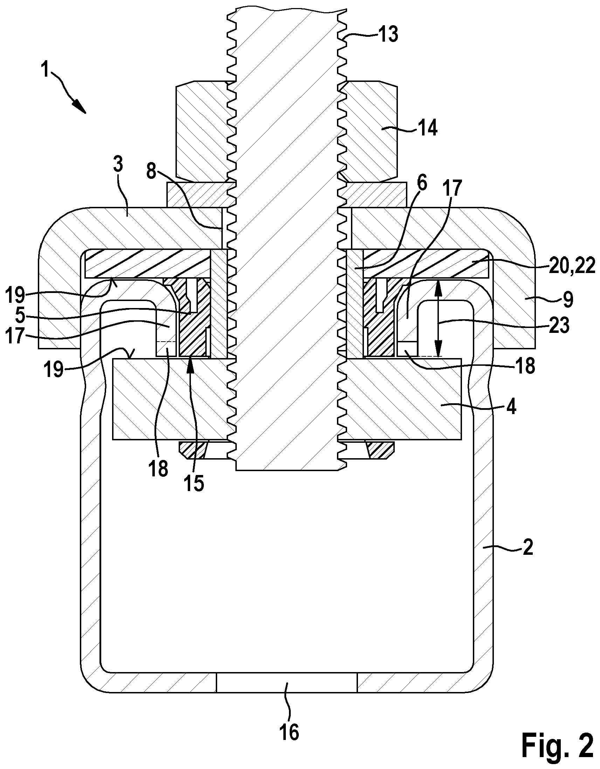

Der in Figuren 1 und 2 dargestellte, erfindungsgemäße Schiebebefestiger 1 ist zu einer in einer Längsrichtung einer Montageschiene 2 verschieblichen Anordnung an der Montageschiene 2 vorgesehen. Der Schiebebefestiger 1 weist ein Auflager 3, ein Hammerkopfelement 4, einen Halter 5 für das Hammerkopfelement 4 und einen Abstandshalter 6, der das Hammerkopfelement 4 in einem Abstand von dem Auflager 3 hält, auf.

Das Hammerkopfelement 4 kann auch als Hammerkopfmutter oder Nutenstein aufgefasst werden, es weist ein durchgehendes Mittelloch mit einem Innengewinde auf, das ein Befestigungsgewinde 7 des Hammerkopfelements 4 und des Schiebebefestigers 1 bildet. Axial zum Befestigungsgewinde 7 gesehen weist das Hammerkopfelement 4 eine näherungsweise rechteckige Form auf.

Das Auflager 3 ist im Ausführungsbeispiel eine Platte mit einem Durchgangsloch 8 in ihrer Mitte und rechtwinkligen Abwinklungen 9 in der gleichen Richtung an zwei gegenüberliegenden Seiten. Dabei ist ein Durchmesser des Durchgangslochs 8 mindestens so groß und im Ausführungsbeispiel etwas größer als ein Gewindeaußendurchmesser, das heißt ein größter Durchmesser des Befestigungsgewindes 7 des Hammerkopfelements 4.

Der Abstandshalter 6 ist im Ausführungsbeispiel eine zylinderrohrförmige Hülse, deren Innendurchmesser mindestens so groß wie der Gewindeaußendurchmesser des Befestigungsgewindes 7 und deren Außendurchmesser größer als ein Durchmesser des Durchgangslochs 8 des Auflagers 3 ist. Die den Abstandshalter 6 bildende Hülse ist koaxial zum Befestigungsgewinde 7 des Hammerkopfelements 4 und zum Durchgangsloch 8 des Auflagers 3 zwischen dem Hammerkopfelement 4 und dem Auflager 3 angeordnet und hält das Hammerkopfelement 4 in einem Mindestabstand von dem Auflager 3.

Der Halter 5 weist eine Tasche 10, das heißt einen Hohlraum auf, in den das Hammerkopfelement 4 einbringbar ist, und ein Loch als Aufnahme 11 für den Abstandshalter 6. In dem Halter 5 ist das Hammerkopfelement 4 mit seinem Befestigungsgewinde 7 koaxial zum Abstandshalter 6 gehalten.

Im Ausführungsbeispiel besteht der Halter 5 aus Kunststoff, wogegen das Hammerkopfelement 4, der Abstandshalter 6 und das Auflager 3 aus Metall, im Ausführungsbeispiel aus Stahl bestehen, so dass sie als starr angesehen werden können und jedenfalls erheblich steifer als der Halter 5 sind.

An einer dem Hammerkopfelement 4 fernen Seite weist der Halter 5 radial in entgegengesetzten Richtungen abstehende Flügelelemente 12 auf.

In das Befestigungsgewinde 7 des Hammerkopfelements 4 ist eine Gewindestange 13 geschraubt, die durch das Durchgangsloch 8 des Auflagers 3 und durch die den Abstandshalter 6 bildende Hülse durchgeführt ist. Die Gewindestange 13 kann allgemein auch als Schraubelement aufgefasst werden. Auf einer dem Hammerkopfelement 4 abgewandten Seite ist lose eine Mutter 14 auf die Gewindestange 13 geschraubt, so dass die Einzelteile des Schiebebefestigers 1 zusammengehalten sind.

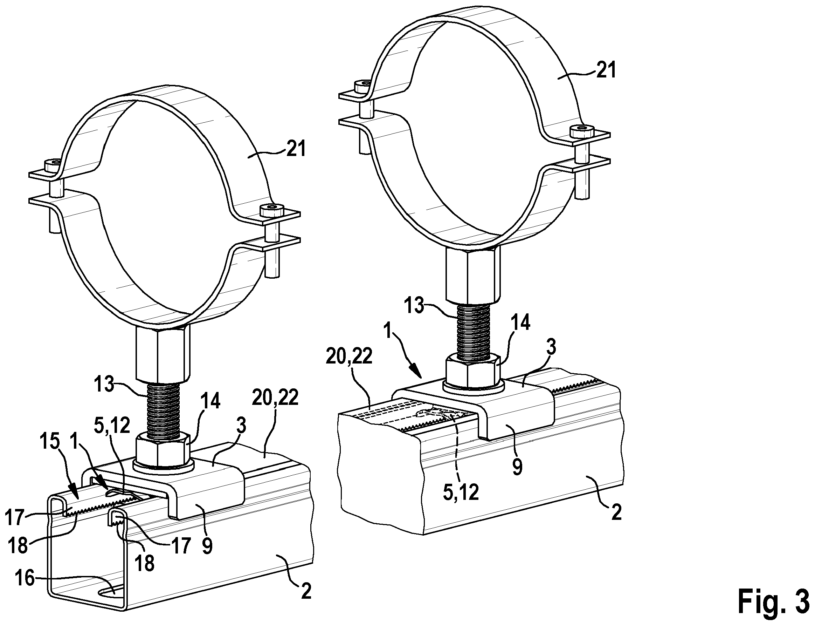

Die in Figur 2 und 3 gezeichnete Montageschiene 2 weist einen rechteckigen Rohrquerschnitt, einen durchgehenden Längsschlitz 15 in einer Quermitte einer ersten Seite und Langlöcher 16 in einer Quermitte einer der ersten Seite gegenüberliegenden zweiten Seite auf. Sie ist zu einer Befestigung an beispielsweise einer nicht dargestellten Decke, Wand oder Pfosten vorgesehen. Im Ausführungsbeispiel weist die Montageschiene 2 in ihrer Längsrichtung verlaufende, an Seitenrändern des Längsschlitzes 15 nach innen gerichtete Abwinkelungen, also nach innen stehende Stege 17 auf, die im Ausführungsbeispiel zahnstangenartige Verzahnungen 18 an ihren der zweiten Seite der Montageschiene 2 zugewandten Rändern aufweisen.

Der Schiebebefestiger 1 wird so an der Montageschiene 2 angeordnet, dass sich das Hammerkopfelement 4 in der Montageschiene 2 befindet und das Auflager 3 außen an der ersten, den Längsschlitz 15 aufweisenden Seite der Montageschiene 2 anliegt. Das Hammerkopfelement 4 wird in Längsrichtung der Montageschiene 2 ausgerichtet durch den Längsschlitz 15 in die Montageschiene 2 eingebracht und in der Montageschiene 2 gedreht, so dass es die Montageschiene 2 innen hintergreift. Um das Hammerkopfelement 4 durch den Längsschlitz 15 in die Montageschiene 2 einbringen zu können, ist es schmaler als der Längsschlitz 15 breit ist. Und das Hammerkopfelement 4 ist länger als der Längsschlitz 15 breit ist, um das Hammerkopfelement 4 durch Drehung in der Montageschiene 2 in Hintergriff in der Montageschiene 2 bringen zu können.

Wird die Mutter 14 auf der Gewindestange 13 festgezogen, hält der Abstandshalter 6 das Hammerkopfelement 4 in einem solchen Abstand von dem Auflager 3, dass der Schiebebefestiger 1 nicht an der Montageschiene 2 festklemmt, sondern in deren Längsrichtung verschieblich ist. Einander zugewandte Flächen des Hammerkopfelements 4 und des Auflagers 3 sind als Gleitflächen 19 glatt ausgebildet, das heißt sie weisen keine Verzahnung oder sonstige Oberflächenstruktur auf, so dass der Schiebebefestiger 1 trotz der Verzahnungen 18 an den inneren Rändern der Stege 17 der Montageschiene 2 an beiden Seiten des Längsschlitzes 15 in der Längsrichtung der Montageschiene 2 verschiebbar ist. Der Mindestabstand, in dem der Abstandshalter 6 das Hammerkopfelement 4 vom Auflager 3 hält, ist größer als eine Höhe 23 der Stege 17 der Montageschiene 2 beiderseits des Längsschlitzes 15 zuzüglich einer Dicke eines noch zu erläuternden Gleitelements 20, so dass der Schiebebefestiger immer in Längsrichtung der Montageschiene 2 verschiebbar ist, auch wenn die Mutter 14 fest gezogen ist oder wird. Die Höhe 23 der Stege 17 kann auch als Höhe 23 der ersten, den Längsschlitz 15 aufweisenden Seite der Montageschiene 2 aufgefasst werden. Für eine Montageschiene 2 ohne die nach innen stehenden Stege 17 an den beiden Seiten des Längsschlitzes 15 wäre der Mindestabstand, in dem der Abstandshalter 6 das Hammerkopfelement 4 von dem Auflager 3 hält, größer als eine Wanddicke der ersten Seite der Montageschiene 2 und - sofern vorhanden - die Dicke des Gleitelements 20. Der Abstandshalter 6 stellt Spiel des Schiebebefestigers 1 in axialer Richtung des Befestigungsgewindes 7 an der Montageschiene 2 sicher, so dass immer ein Spalt zwischen dem Hammerkopfelement 4 und den Stegen 17 der Montageschiene 2 oder zwischen der ersten Seite der Montageschiene 2 und dem Gleitelement 20 beziehungsweise dem Auflager 3 besteht. Durch den Spalt ist der Schiebebefestiger 1 in der Längsrichtung der Montageschiene 2 verschiebbar und lässt sich nicht durch Festziehen der Mutter 14 festklemmen.

An der Gewindestange 13 lässt sich beispielsweise eine Rohrschelle 21 befestigen. Durch die Unverschiebbarkeit in der Längsrichtung der Montageschiene 2 gleicht der Schiebebefestiger 1 eine Bewegung eines mit der Rohrschelle 21 befestigten, nicht dargestellten Rohrs durch Temperaturdehnung gegenüber der Montageschiene 2 aus. Zwischen dem Auflager 3 und der ersten Seite der Montageschiene 2 ist im Ausführungsbeispiel zusätzlich das Gleitelement 20 angeordnet, das im Ausführungsbeispiel aus Kunststoff, beispielsweise aus Teflon, besteht. Im Ausführungsbeispiel ist das Gleitelement 20 als Verbindungselement 22 für - im Ausführungsbeispiel zwei - Schiebebefestiger 1 ausgebildet, die in der Längsrichtung der Montageschiene 2 in einem Abstand voneinander an der Montageschiene 2 angeordnet sind. Zu diesem Zweck ist das Gleitelement 20 beziehungsweise das Verbindungselement 22 im Ausführungsbeispiel ein Streifen mit Löchern, durch die die Gewindestangen 13 durchgeführt sind. Dadurch verschieben sich die beiden Schiebebefestiger 1 gemeinsam in der Längsrichtung der Montageschiene 2.

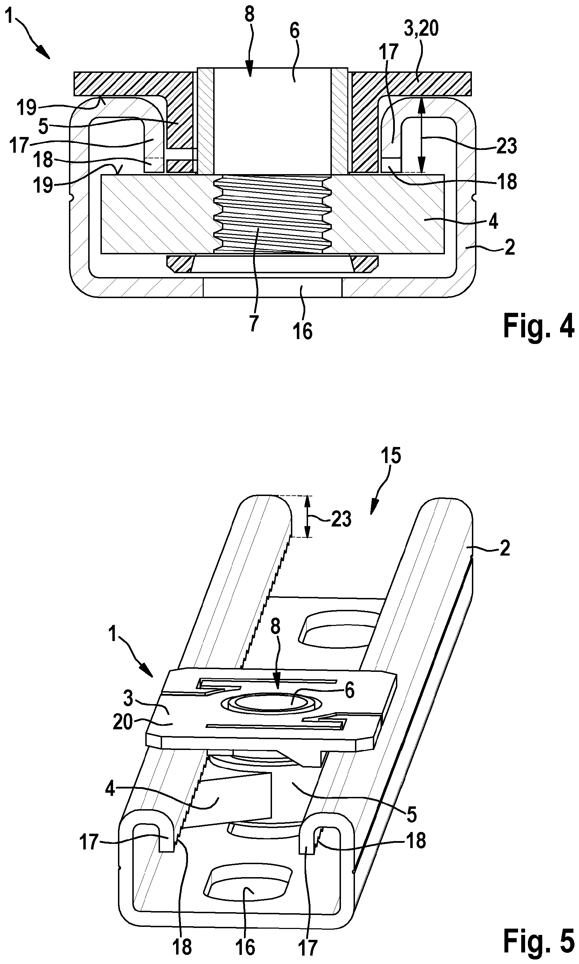

In den Figuren 4 und 5 ist ein weiteres Ausführungsbeispiel eines erfindungsgemäßen Schiebebefestigers 1 dargestellt. Aus Gründen der Übersichtlichkeit wurden gleiche Bezugszeichen verwendet. Der Unterschied des in Figuren 4 und 5 dargestellten, erfindungsgemäßen Schiebebefestigers 1 zu dem in Figuren 1 und 2 dargestellten Schiebebefestiger 1 ist, dass in Figuren 4 und 5 das Auflager 3 und der Halter 5 Bestandteile eines einzigen Bauteils und somit einstückig miteinander sind. Der Halter 5 ist rohrförmig und bildet zugleich auch die Aufnahme 11 für den Abstandshalter 6, der wie in Figuren 1 und 2 eine zylinderrohrförmige Hülse aus Stahl oder einem anderen Metall ist. Wie in Figuren 1 und 2 weist der Halter 5 auch in Figuren 4 und 5 den die Tasche 10 bildenden Hohlraum auf, in der das Hammerkopfelement 4 radial zu dem rohrförmigen Halter 5 und mit seinem das Befestigungsgewinde 7 bildenden Innengewinde koaxial zum Halter 5 anordenbar ist.

Das Auflager 3 ist im Ausführungsbeispiel der Figuren 4 und 5 eine zu dem rohrförmigen Halter 5 radiale, im Ausführungsbeispiel rechteckige Platte an einem Stirnende des Halters 5. Das Auflager 3 weist ein Mittelloch als Durchgangloch 8 auf, das mit einem Innenumfang des Halters 5 fluchtet.

Der Abstandshalter 6 verhindert, dass durch Einschrauben und Festziehen eines nicht dargestellten Schraubelements in das Befestigungsgewinde 7 des Hammerkopfelements 4 das Auflager 3 gegen das Hammerkopfelement 4 gespannt wird. Der Abstandshalter 6 stellt den Mindestabstand zwischen dem Auflager 3 und dem Hammerkopfelement 4 sicher, der größer als die Höhe h der Stege 17 an den Seiten des Längsschlitzes 15 der Montageschiene 2 ist, damit der Schiebebefestiger 1 nicht an der Montageschiene 2 festklemmt, sondern in ihrer Längsrichtung verschiebbar ist. Der Mindestabstand besteht zwischen einer dem Hammerkopfelement 4 zugewandten Unterseite des Auflagers 3 und einer dem Auflager 3 zugewandten Oberseite des Hammerkopfelements 4. Die Unterseite des Auflagers 3 und die Oberseite des Hammerkopfelements 4 sind glatt, das heißt ohne Verzahnung oder Oberflächenstruktur als Gleitflächen 19 ausgebildet.

Im Ausführungsbeispiel ist das Bauteil, das das Auflager 3 und das Hammerkopfelement 4 einstückig miteinander umfasst, durch Spritzgießen aus Kunststoff hergestellt. Dadurch besteht das Auflager 3 aus Kunststoff und bildet zugleich das Gleitelement 20 für ein reibungsarmes Gleiten auf der Montageschiene 2.

Durch die Einstückigkeit des Halters 10 mit dem Auflager 3 ist das Hammerkopfelement 4 drehfest mit dem Auflager 3, so dass sich das Hammerkopfelement 4 drehen und dadurch in der Montageschiene 2 quer stellen lässt, indem das an der Außenseite der Montageschiene 2 befindliche Auflager 3 gedreht wird.

Im Übrigen ist der Schiebebefestiger 1 aus Figuren 4 und 5 gleich ausgebildet wie der Schiebebefestiger 1 aus Figuren 1 und 2, so dass zur Erläuterung der Figuren 4 und 5 ergänzend auf die Erläuterungen der Figuren 1 und 2 verwiesen werden kann.

### Bezugszeichenliste

- 1: Schiebebefestiger
- 2: Montageschiene
- 3: Auflager
- 4: Hammerkopfelement
- 5: Halter
- 6: Abstandshalter
- 7: Befestigungsgewinde
- 8: Durchgangsloch
- 9: Abwinklung
- 10: Tasche
- 11: Aufnahme
- 12: Flügelelement
- 13: Gewindestange
- 14: Mutter
- 15: Längsschlitz
- 16: Langloch
- 17: Steg
- 18: Verzahnung
- 19: Gleitfläche
- 20: Gleitelement
- 21: Rohrschelle
- 22: Verbindungselement
- 23: Höhe der Stege 17

## Patentansprüche

1. Schiebebefestiger für eine Montageschiene (2), wobei der Schiebebefestiger (1) ein Auflager (3) aufweist, das zu einer Anlage außen an der Montageschiene (2) vorgesehen ist und das ein Durchgangsloch (8) aufweist, wobei der Schiebebefestiger (1) ein Hammerkopfelement (4) aufweist, das zu einer Anlage innen an der Montageschiene (2) vorgesehen ist und das ein mit dem Durchgangsloch (8) des Auflagers (3) gleichachsiges Befestigungsgewinde (7) aufweist, dessen Gewindeaußendurchmesser nicht größer als ein Durchmesser des Durchgangslochs (8) des Auflagers (3) ist, und wobei der Schiebebefestiger (1) einen Halter (5) für das Hammerkopfelement (4) aufweist, wobei der Schiebebefestiger (1) einen von dem Halter (5) separaten Abstandshalter (6) aufweist, der das Hammerkopfelement (4) in einem Mindestabstand von dem Auflager (3) hält, derart, dass ein Festklemmen des Schiebebefestigers (1) an der Montageschiene (2) verhinderbar ist.

2. Schiebebefestiger nach Anspruch 1, **dadurch gekennzeichnet, dass** der Abstandshalter (6) eine mit dem Befestigungsgewinde (7) gleichachsige Hülse ist, deren Innendurchmesser mindestens so groß wie der Gewindeaußendurchmesser des Befestigungsgewindes (7) des Hammerkopfelements (4) ist.

3. Schiebebefestiger nach Anspruch 1 oder 2, **dadurch gekennzeichnet, dass** das Auflager (3) an einer dem Hammerkopfelement (4) zugewandten Seite und/oder das Hammerkopfelement (4) an einer dem Auflager (3) zugewandten Seite glatte Gleitflächen (19) aufweist.

4. Schiebebefestiger nach Anspruch 1 oder 2, **dadurch gekennzeichnet, dass** der Halter (5) das Hammerkopfelement (4) drehfest mit dem Auflager (3) verbindet derart, dass durch Drehen des Auflagers (3) das Hammerkopfelement (4) in der Montageschiene (2) drehbar ist.

5. Schiebebefestiger nach einem oder mehreren der Ansprüche 1 bis 3, **dadurch gekennzeichnet, dass** der Halter (5) einstückig mit dem Auflager (3) ist.

6. Schiebebefestiger nach einem oder mehreren der vorhergehenden Ansprüche, **dadurch gekennzeichnet, dass** der Halter (5) eine Tasche (10) aufweist, in die das Hammerkopfelement (4) radial zu einer Achse seines Befestigungsgewindes (7) einbringbar ist.

7. Schiebebefestiger nach einem oder mehreren der vorhergehenden Ansprüche, **dadurch gekennzeichnet, dass** das Befestigungsgewinde (7) des Hammerkopfelements (4) ein Innengewinde ist.

8. Montageschiene (2) mit einem Schiebebefestiger (1) nach einem oder mehreren der vorhergehenden Ansprüche, **dadurch gekennzeichnet, dass** die Montageschiene (2) einen Längsschlitz (15) in einer ersten Seite aufweist und dass das Auflager (3) des Schiebebefestigers (1) außen und das Hammerkopfelement (4) innen an der ersten Seite der Montageschiene (2) angeordnet sind derart, dass das Auflager (3) außen an der ersten Seite der Montageschiene (2) anliegt, wenn es gegen die Außenseite der ersten Seite der Montageschiene (2) beaufschlagt wird, und das Hammerkopfelement (4) die Montageschiene (2) innen hintergreift, so dass es nicht in Richtung einer Achse seines Befestigungsgewindes (7) aus der Montageschiene (2) herausgezogen werden kann.

9. Montageschiene nach Anspruch 8, **dadurch gekennzeichnet, dass** der Mindestabstand des Hammerkopfelements (4) von dem Auflager (3) größer als eine Höhe (23) der ersten Seite der Montageschiene (2) senkrecht zu der ersten Seite ist.

10. Montageschiene nach Anspruch 8 oder 9, **dadurch gekennzeichnet, dass** das Hammerkopfelement (4) Spiel in axialer Richtung seines Befestigungsgewindes (7) in der Montageschiene (2) aufweist.

11. Montageschiene nach einem oder mehreren der Ansprüche 8 bis 10, **dadurch gekennzeichnet, dass** zwei oder mehr Schiebebefestiger (1) in der Längsrichtung der Montageschiene (2) hintereinander an der Montageschiene (2) angeordnet sind, und dass die Schiebebefestiger (1) mit einem Verbindungselement (22) in ihrem Abstand voneinander gehalten werden.

## Claims

1. A slide fastener for a mounting rail (2), wherein the slide fastener (1) has a support (3) which is provided for contact on the outside of the mounting rail (2) and has a through-hole (8), wherein the slide fastener (1) has a hammerhead element (4) which is provided for contact on the inside of the mounting rail (2) and has a fastening thread (7) that is coaxial with the through-hole (8) of the support (3) and the thread outer diameter of which is not greater than a diameter of the through-hole (8) of the support (3), and wherein the slide fastener (1) has a holder (5) for the hammerhead element (4), wherein the slide fastener (1) has a spacer (6) which is separate from the holder (5) and which holds the hammerhead element (4) at a minimum distance from the support (3) in such a way that jamming of the slide fastener (1) on the mounting rail (2) can be prevented.

2. The slide fastener according to claim 1, **characterized in that** the spacer (6) is a sleeve that is coaxial with the fastening thread (7), the inside diameter of which sleeve is at least as large as the thread outer diameter of the fastening thread (7) of the hammerhead element (4).

3. The slide fastener according to either claim 1 or 2, **characterized in that** the support (3) has smooth sliding surfaces (19) on a side facing the hammerhead element (4) and/or the hammerhead element (4) has smooth sliding surfaces (19) on a side facing the support (3).

4. The slide fastener according to either claim 1 or 2, **characterized in that** the holder (5) connects the hammerhead element (4) to the support (3) in a rotationally fixed manner such that the hammerhead element (4) can be rotated in the mounting rail (2) by rotating the support (3).

5. The slide fastener according to one or more of claims 1 to 3, **characterized in that** the holder (5) and the support (3) are one piece.

6. The slide fastener according to one or more of the preceding claims, **characterized in that** the holder (5) has a pocket (10) into which the hammerhead element (4) can be inserted radially to an axis of its fastening thread (7).

7. The slide fastener according to one or more of the preceding claims, **characterized in that** the fastening thread (7) of the hammerhead element (4) is an internal thread.

8. A mounting rail (2) having a slide fastener (1) according to one or more of the preceding claims, **characterized in that** the mounting rail (2) has a longitudinal slot (15) in a first side **and in that** the support (3) of the slide fastener (1) is arranged on the outside and the hammerhead element (4) is arranged on the inside of the first side of the mounting rail (2) in such a way that the support (3) rests against the first side of the mounting rail (2) on the outside when pushed against the outside of the first side of the mounting rail (2), and the hammerhead element (4) engages behind the mounting rail (2) on the inside, so that it cannot be pulled out of the mounting rail (2) in the direction of an axis of its fastening thread (7).

9. The mounting rail according to claim 8, **characterized in that** the minimum distance of the hammerhead element (4) from the support (3) is greater than a height (23) of the first side of the mounting rail (2) perpendicular to the first side.

10. The mounting rail according to claim 8 or 9, **characterized in that** the hammerhead element (4) has play in the axial direction of its fastening thread (7) in the mounting rail (2).

11. The mounting rail according to one or more of claims 8 to 10, **characterized in that** two or more slide fasteners (1) are arranged one behind the other on the mounting rail (2) in the longitudinal direction of the mounting rail (2), **and in that** the slide fasteners (1) are held at their distance from one another by means of a connecting element (22).

## Revendications

1. Fermoir actionné par curseur pour un rail de montage (2), dans lequel le fermoir actionné par curseur (1) présente un organe d'appui (3) qui est prévu pour un appui à l'extérieur du rail de montage (2) et qui présente un trou de passage (8), dans lequel le fermoir actionné par curseur (1) présente un élément formant tête de marteau (4) qui est prévu pour un appui à l'intérieur du rail de montage (2) et qui présente un filetage de fixation (7) coaxial avec le trou de passage (8) de l'organe d'appui (3), le diamètre extérieur de filetage dudit filetage de fixation n'étant pas supérieur à un diamètre du trou de passage (8) de l'organe d'appui (3), et dans lequel le fermoir actionné par curseur (1) présente un support (5) pour l'élément formant tête de marteau (4), dans lequel le fermoir actionné par curseur (1) présente une entretoise (6) séparée du support (5), laquelle entretoise maintient l'élément formant tête de marteau (4) à une distance minimale de l'organe d'appui (3), de telle sorte qu'un blocage du fermoir actionné par curseur (1) sur le rail de montage (2) peut être empêché.

2. Fermoir actionné par curseur selon la revendication 1,
**caractérisé en ce que** l'entretoise (6) est une douille coaxiale avec le filetage de fixation (7), le diamètre intérieur de ladite douille étant au moins aussi grand que le diamètre extérieur de filetage du filetage de fixation (7) de l'élément formant tête de marteau (4).

3. Fermoir actionné par curseur selon la revendication 1 ou 2,
**caractérisé en ce que** l'organe d'appui (3) présente des surfaces de glissement (19) lisses sur un côté tourné vers l'élément formant tête de marteau (4) et/ou l'élément formant tête de marteau (4) présente des surfaces de glissement lisses sur un côté tourné vers l'organe d'appui (3).

4. Fermoir actionné par curseur selon la revendication 1 ou 2,
**caractérisé en ce que** le support (5) relie l'élément formant tête de marteau (4) à l'organe d'appui (3) solidairement en rotation de telle sorte que l'élément formant tête de marteau (4) peut tourner dans le rail de montage (2) par rotation de l'organe d'appui (3).

5. Fermoir actionné par curseur selon l'une ou plusieurs des revendications 1 à 3, **caractérisé en ce que** le support (5) est d'une seule pièce avec l'organe d'appui (3).

6. Fermoir actionné par curseur selon l'une ou plusieurs des revendications précédentes, **caractérisé en ce que** le support (5) présente une poche (10) dans laquelle l'élément formant tête de marteau (4) peut être inséré radialement par rapport à un axe de son filetage de fixation (7).

7. Fermoir actionné par curseur selon l'une ou plusieurs des revendications précédentes, **caractérisé en ce que** le filetage de fixation (7) de l'élément formant tête de marteau (4) est un filetage intérieur.

8. Rail de montage (2) pourvu d'un fermoir actionné par curseur (1) selon l'une ou plusieurs des revendications précédentes, **caractérisé en ce que** le rail de montage (2) présente une fente longitudinale (15) sur un premier côté, **et en ce que** l'organe d'appui (3) du fermoir actionné par curseur (1) est disposé à l'extérieur et l'élément formant tête de marteau (4) est disposé à l'intérieur du premier côté du rail de montage (2) de telle sorte que l'organe d'appui (3) repose à l'extérieur du premier côté du rail de montage (2) lorsqu'il est sollicité contre le côté extérieur du premier côté du rail de montage (2), et l'élément formant tête de marteau (4) entre en prise par l'arrière avec le rail de montage (2) à l'intérieur, de sorte qu'il ne peut pas être retiré du rail de montage (2) dans la direction d'un axe de son filetage de fixation (7).

9. Rail de montage selon la revendication 8, **caractérisé en ce que** la distance minimale entre l'élément formant tête de marteau (4) et l'organe d'appui (3) est supérieure à une hauteur (23) du premier côté du rail de montage (2) perpendiculairement au premier côté.

10. Rail de montage selon la revendication 8 ou 9, **caractérisé en ce que** l'élément formant tête de marteau (4) présente un jeu dans la direction axiale de son filetage de fixation (7) dans le rail de montage (2).

11. Rail de montage selon l'une ou plusieurs des revendications 8 à 10, **caractérisé en ce que** deux ou plusieurs fermoirs actionnés par curseur (1) sont disposés l'un derrière l'autre sur le rail de montage (2) dans la direction longitudinale du rail de montage (2), **et en ce que** les fermoirs actionnés par curseur (1) sont maintenus à leur distance les uns des autres par un élément de liaison (22).
